# EUROPEAN PATENT SPECIFICATION

(11) **EP 3 392 702 B1**
(45) Date of publication and mention of the grant of the patent: **20.01.2021**
(21) Application number: 18167800.4
(22) Date of filing: 17.04.2018
(51) Int. Cl.: G02F 1/1335

(54) **NIGHT VISION COMPATIBLE AVIONICS DISPLAY**
NACHTSICHTKOMPATIBLE AVIONIKANZEIGE
AFFICHAGE AVIONIQUE COMPATIBLE DE VISION NOCTURNE

(30) Priority: 19.04.2017 US 201715491815
(43) Date of publication of application: 24.10.2018
(73) Proprietor: General Electric Company, Schenectady, NY 12345 (US)
(72) Inventor: MEYERS, Mark Marshall, Niskayuna, NY New York 12309 (US)
(74) Representative: Openshaw & Co.

(56) References cited:
- CN-A- 103 441 123
- CN-A- 105 449 078
- US-A1- 2006 187 378
- US-A1- 2016 003 449

## Description

### BACKGROUND

The subject matter disclosed herein relates to displays, and more specifically to avionics displays for use with night vision googles.

In order to avoid detection, military activities may be undertaken in complete darkness. Pilots and crew of aircraft may utilize night vision goggles in order to be able to see infrared (IR) emissions from various sources of interest (e.g., people, engines, etc.). Typical fluorescent or white light emitting diode (LED) backed displays emit light in the near IR spectrum (900-1100nm), causing blooming or saturation in night vision goggles, such that a person wearing night vision googles cannot see what is being displayed.

CN 103 441 123 A discloses an LED and a display device and relates to display techniques. CN 105 449 078 A discloses a white light LED comprising a substrate, an LED chip and a transmitting shell. US 2016/003449 A1 discloses an NVIS-compatible backlight assembly for an LCD display comprising a short-wavelength (blue) light source positioned in a first layer and a photoluminescent layer positioned adjacent the first layer. US 2006/187378 A1 discloses using of a plurality of OLED displays and a diffuser to form a display backlight. Such a backlight can be used as an AMLCD backlight.

### BRIEF DESCRIPTION

Certain aspects commensurate in scope with the original claims are summarized below. These aspects are not intended to limit the scope of the claims, but rather are intended only to provide a brief summary of possible forms of the claimed subject matter. Indeed, the claims may encompass a variety of forms that may be similar to or different from the aspects set forth below.

In one aspect, a display includes a blue light emitting diode (LED) and a transparent shell disposed over the blue LED. The transparent shell includes a plurality of red quantum dots configured to absorb light from the blue LED and emit light in a red spectral region.

In a second aspect, a method of manufacturing a display includes installing a transparent shell over one or more blue LEDs. The transparent shell comprises a plurality of red quantum dots configured to absorb light from the blue LED and emit light in a red spectral region, wherein the plurality of red quantum dots are configured to emit light having a peak emission at 635nm or less.

In a third aspect, a method of operating a display includes emitting light in a blue spectral region via one or more blue LEDs, absorbing the light emitted by the one or more blue LEDS, via one or more red quantum dots disposed on one or more shells disposed over the one or more blue LEDs, emitting light in a red spectral region, wherein the one or more red quantum dots are configured to emit light having a peak emission at 635nm or less, and transmitting, via the one or more shells, light in the blue spectral region emitted by the one or more blue LEDs.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 is a side, section view of a display, in accordance with an embodiment;
FIG. 2 is an absorption and emission spectrum plot quantum dots having a peak emission with a wavelength of 590nm, in accordance with an embodiment;
FIG. 3 is a flow chart of a process for manufacturing the display of FIG. 1, in accordance with an embodiment; and
FIG. 4 is a flow chart of a process for operating the display of FIG. 1, in accordance with an embodiment;

### DETAILED DESCRIPTION

One or more specific embodiments will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," "the," and "said" are intended to mean that there are one or more of the elements. The terms "comprising," "including," and "having" are intended to be inclusive and mean that there may be additional elements other than the listed elements. Furthermore, any numerical examples in the following discussion are intended to be non-limiting, and thus additional numerical values, ranges, and percentages are within the scope of the disclosed embodiments.

Military operations involving aircraft (e.g., helicopters, planes, etc.) are sometimes carried out at night and in complete darkness to avoid detection. During these activities, pilots and crew of aircraft may utilize night vision goggles to see infrared (IR) emissions from various sources of interest (e.g., people engines, etc.). Fluorescent and white light emitting diode (LED) back displays emit light in the near IR spectrum (900-1100nm), which, when viewed through night vision googles, may cause blooming or saturation, making it difficult for the user to see what is being displayed. A glass plate coated with a low pass dielectric filter laid over the display may prevent the light in the near IR spectrum from being emitted, but filters out many of the red colors emitted by the display. Further, such techniques add weight to the display, increase cost, and lead to reduced contrast in the display, as seen by the user.

By using a transparent domes equipped with red and green quantum dots, and disposed over blue LEDS, a display may emit high quality red colors without emitting light in the near IR spectrum. Such a display would not cause saturation or blooming when viewed by a user wearing night vision goggles.

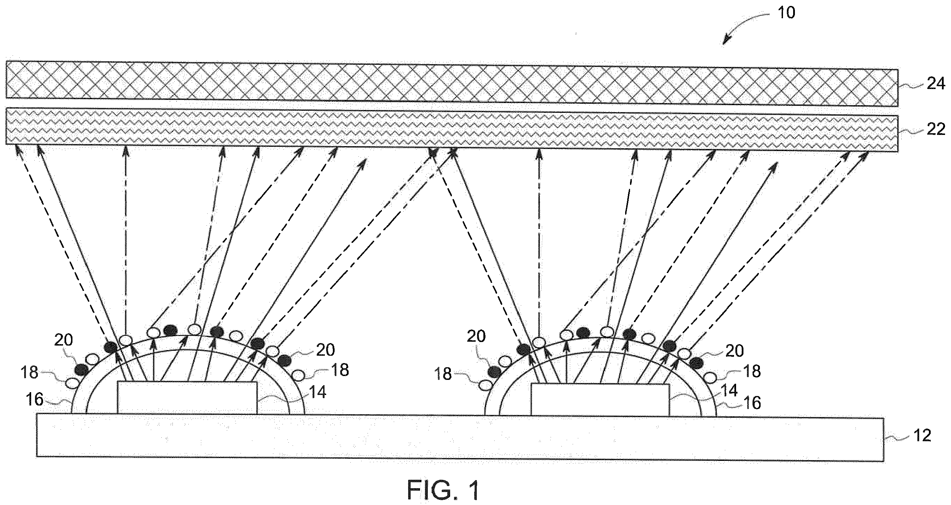

Turning now to the figures, FIG. 1 is side-section view of a display 10. The display 10 includes a baseplate 12 (e.g., a substrate) and an array of blue LEDs 14. Disposed over the blue LEDs 14 are transparent shells 16. Each shell 16 may cover multiple blue LEDs 14, or a single blue LED 14. Each shell 16 may have a substantially hemispherical or dome shape. Each shell 16 may be made of glass, a polymer, or some other transparent material. Disposed on an exterior surface of, an interior surface of, or within the material forming each shell 16, may be green quantum dots 18 and red quantum dots 20. By offsetting the quantum dots 18, 20 from the blue LED 14, the quantum dots 18, 20 are not exposed to the heat dissipated by the blue LED 14.

Based on the sizes of the quantum dots 18, 20, the green and red quantum dots 18, 20 absorb light in the spectral region emitted by the blue LED 14 (e.g., peak emission around 450-460nm) and then emit light in the green spectral region (e.g., peak emission around 540-550nm) and the red spectral region (e.g., peak emission around 620-635nm), respectively. Though the red spectral region typically covers 620-740nm, light emitted at the high end of the spectral region (e.g., starting from 650nm, 675nm, or 700nm and ranging to approximately 740nm) may cause blooming or saturation when viewed through night vision goggles. Accordingly, the red quantum dots 20 may be configured to absorb light from the blue LED 14 and emit light having peak emission at a wavelength of no more than approximately 620nm, 625nm, or 630nm, a bandwidth of 30nm or less, and/or low or no intensity at wavelengths above 640nm. Green light emitted by the green quantum dots 18, red light emitted by the red quantum dots 20, and the blue light emitted by the blue LED 14 that passes through the shell 16 simulate green, red, and blue pixels, respectively, which may be used in combination to generate a range of colors on the display 10.

As illustrated, a diffuser 22 and an LCD 24 may be installed above the base plate 12, the blue LEDS 14, and the shells 16. The diffuser 22 scatters and reflects the light emitted by the blue LEDs 14, the green quantum dots 18, and the red quantum dots 20 before it hits the LCD 24. The diffuser 22 homogenizes the red and green backlight intensity, making them more uniform before being transmitted through the LCD 24. The LCD 24 may selectively transmit the light received from the diffuser 22 such that the sources of blue, green, and red light act as pixels to generate a displayed image. Because light emitted by the display 10 has a very low or no intensity in the near IR spectral region (e.g., 700-110nm), the display 10 can be viewed through night vision goggles without a secondary low pass dielectric filter. Further, to the naked eye, the display 10 provides a full RGB display with reasonable color gamut for viewing full color images.

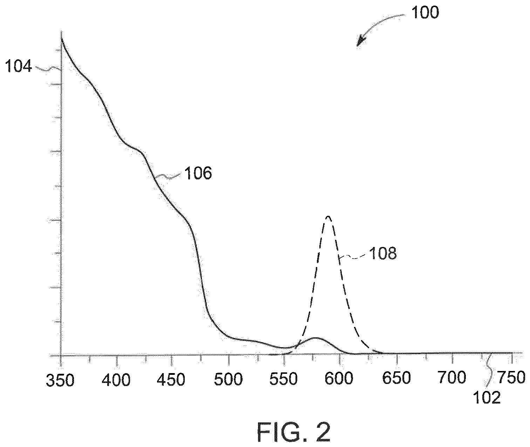

FIG. 2 is an absorption and emission spectrum plot for "Series A Plus CANdots from CAN GmbH of Hamburg Germany, having a peak emission with a wavelength of 590nm. The horizontal axis 102 represents wavelength in nm and the vertical axis 104 represents intensity. As illustrated by line 106, the dots absorb light having a wavelength of mostly 300-500nm and then emit light (line 108) with a peak emission at 590nm, and little to no intensity above about 650nm. It should be understood, however, that FIG. 2 is merely an example of how quantum dots absorb light from a first range of wavelengths and then emit light having a second range of wavelengths. Accordingly, CANdots are available in various versions designed to emit light in different wavelength ranges.

Quantum dots include nanoparticles and are typically composed of cadmium selenide (CdSe) or cadmium sulfide (CdS), but quantum dots of other materials may be possible. The peak emission wavelength of a quantum dot may be adjusted by controlling the radius of the quantum dot during synthesis. The larger the radius of the quantum dot, the longer the emission wavelength. By designing quantum dots that do not emit light in the near IR spectral region (700-1100nm), the resulting display may be capable of displaying rich colors that do not result in blooming or saturation when viewed through night vision goggles. For example, the resulting display may be compatible with Military Standard 3009 ("MIL-STD-3009").

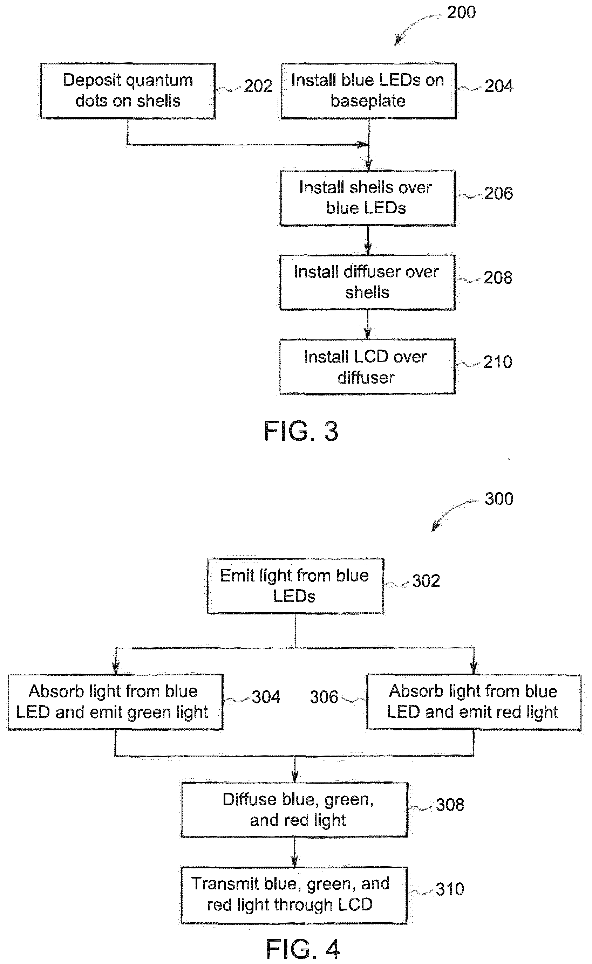

FIG. 3 is a flow chart of a process 200 for manufacturing the display 10 shown in FIG. 1. In block 202, the green and red quantum dots are deposited on the shells. As previously discussed, the shells may be hemispherical or dome shaped and may be made of glass, a polymer, or another transparent material. The green and red quantum dots may be made of nanoparticles including cadmium selenide (CdSe), cadmium sulfide (CdS), or some other appropriate material. The radii of the quantum dots may be selected such that the quantum dots have a low intensity (e.g., 1% of the peak intensity, or between 0% and 20% of the peak intensity) at a wavelength greater than 630nm, 640nm, 650nm, 660nm, 670nm, 680nm, 690nm, or 700nm, or do not emit light with a wavelength greater than 630nm, 640nm, 650nm, 660nm, 670nm, 680nm, 690nm, or 700nm. The green quantum dots may have a radius selected to have peak emission at 540-550nm. The red quantum dots may have a radius selected to have peak emission at 620-635nm. In the embodiment illustrated in FIG. 1, the quantum dots are disposed on an exterior surface of each shell. However, the quantum dots may also be deposited on an interior surface of the shells, or suspended within the material that forms the shell.

In block 204, the blue LEDs are installed on the baseplate. The blue LEDs may be distributed across the baseplate in a two-dimensional array, or in some other pattern. In some embodiments the baseplate and the blue LEDs may be purchased from different vendors and assembled, or the baseplate may be purchased from a vendor with the blue LEDs already installed.

In block 206, the shells are installed over the blue LEDs. In some embodiments, a shell may cover a single blue LED. In other embodiments, the shell may cover multiple blue LEDs. For example, in some embodiments, each shell may cover a row or column of LEDs. In other embodiments, each shell may cover a two-dimensional array of blue LEDs.

In block 208, the diffuser is installed over the shells. As previously described, the diffuser is configured to scatter and reflect the light emitted by the blue LEDs and the green and red quantum dots before the light hits the LCD. The diffuser homogenizes the red and green backlight intensity, making them more uniform before being transmitted through the LCD.

In block 210, the LCD is installed over the diffuser. Because light emitted by the display through the LCD has a very low or no intensity in the near IR spectral region (e.g., 700-110nm), the display can be viewed through night vision goggles without a secondary low pass dielectric filter. Further, to the naked eye, the display provides a full RGB display with reasonable color gamut for viewing full color images.

FIG. 4 is a flow chart of a process 300 for operating the display 10 of FIG. 1. In block 320, light is emitted from a plurality of blue LEDs. The light emitted may have a wavelength in the blue spectral region, with peak emission around 450-460nm. The blue LEDs may be disposed on a baseplate or substrate in a two-dimensional array. The plurality of LEDs may have shells disposed over them. In some embodiments, each blue LED may have a corresponding shell. In other embodiments, each shell may cover multiple LEDs. Each shell may have quantum dots disposed on an interior surface of the shell, an exterior surface of the shell, or within the material that forms the shell. The quantum dots may be configured to absorb the light emitted by the blue LEDs and emit light having a different wavelength.

In block 304, the green quantum dots disposed on the shells absorb light from the blue LEDs (e.g., peak emission around 450-460nm) and emit light in the green spectral region (e.g., peak emission around 540-550nm). In block 306, the red quantum dots disposed on the shells absorb light from the blue LEDs (e.g., peak emission around 450-460nm) and emit light in the red spectral region (e.g., peak emission around 620-635nm). Though the red spectral region typically covers 620-740nm, as previously discussed, light emitted at the high end of the spectral region (e.g., starting from 650nm, 675nm, or 700nm and ranging to approximately 740nm) may cause blooming or saturation when viewed through night vision goggles. Accordingly, the red quantum dots may be configured to absorb light from the blue LED and emit light having peak emission at a wavelength of no more than approximately 620nm, 625nm, or 630nm, a bandwidth of 30nm or less, and no intensity or very low intensity (e.g., 1% of the peak intensity, or between 0% and 20% of the peak intensity) at wavelengths above 640nm. Additionally, it should be understood that some of the blue light emitted from the blue LEDs is transmitted through the shells. Accordingly, the light in the blue spectral region (e.g., peak emission around 450-460nm), the green spectral region (e.g., peak emission around 540-550nm), and the red spectral region (e.g., peak emission around 620-635nm) may propagate outward from the shell toward the diffuser.

In block 308, the diffuser diffuses the blue, green, and red light received from the shell. The diffuser scatters and reflects the light emitted by the blue LEDs and the green and red quantum dots before the light hits the LCD. The diffuser homogenizes the red and green backlight intensity, making them more uniform before being transmitted through the LCD.

In block 310, the LCD transmits the blue, green, and red light received from the diffuser. The LCD may selectively transmit the light received from the diffuser such that the sources of blue, green, and red light act as pixels to generate a displayed image visible to users with and without night vision goggles.

Technical effects of the disclosure include using green and red quantum dots in coordination with blue LEDs to backlight a display that emits light with no intensity, or very low intensity in the near-IR spectral region, such that there is not blooming or saturation when the display is viewed through night vision goggles. However, when viewed with the naked eye, the display is capable of displaying a rich gamut of colors, including reds.

This written description uses examples to disclose the claimed subject matter, including the best mode, and also to enable any person skilled in the art to practice the disclosed subject matter, including making and using any devices or systems and performing any incorporated methods. The patentable scope of the disclosure is defined by the claims, and may include other examples that occur to those skilled in the art.

## Claims

1. A display (10), comprising:
a blue light emitting diode (LED) (14); and
a transparent shell (16) disposed over the blue LED (14), the transparent shell (16) comprising a plurality of red quantum dots (20) configured to absorb light from the blue LED (14) and emit light in a red spectral region;
wherein the blue LED (14) is configured to emit light having a peak emission between 450nm and 460nm; and
wherein the transparent shell (16) is configured to transmit light emitted from the blue LED (14).

2. The display (10) of claim 1, wherein the transparent shell (16) comprises a plurality of green quantum dots (18) configured to absorb light from the blue LED (14) and emit light in a green spectral region.

3. The display (10) of either of claim 1 or 2, wherein the plurality of red quantum dots (20) are configured to emit light having a peak emission at 635nm or less.

4. The display (10) of any preceding claim, wherein the plurality of red quantum dots (20) are configured to emit light having a peak emission between 620nm and 635nm.

5. The display (10) of any preceding claim, wherein the red quantum dots (20) do not emit light having a wavelength greater than 640nm.

6. The display (10) of any preceding claim, wherein the blue LED (14) is coupled to a baseplate (12).

7. The display (10) of claim 6, comprising a liquid crystal display (LCD) (24) disposed opposite the baseplate (12).

8. The display (10) of claim 7, comprising a diffuser (22) disposed between the transparent shell (16) and the LCD (24).

9. The display (10) of any preceding claim, wherein the transparent shell (16) is made of glass.

10. A method (300) of operating a display (10), comprising:
emitting (302) light in a blue spectral region via one or more blue LEDs (14);
absorbing (306) the light emitted by the one or more blue LEDS (14), via one or more red quantum dots (20) disposed on one or more shells (16) disposed over the one or more blue LEDs (14), and emitting (306) light in a red spectral region,; and
transmitting (310), via the one or more shells (16), light in the blue spectral region emitted by the one or more blue LEDs (14);
wherein the light in a blue spectral region has a peak emission between 450nm and 460nm.

11. The method (300) of claim 10, wherein the one or more red quantum dots (20) are configured to emit light having a peak emission at 635nm or less

12. The method (300) of claim 10, comprising absorbing (304) the light emitted by the one or more blue LEDs (14), via one or more green quantum dots (18) disposed on the one or more shells (16) disposed over the one or more blue LEDs (14), and emitting (304) light in a green spectral region

13. The method (300) of claim 12, comprising diffusing (308), via a diffuser (22), the light transmitted by the one or more shells (16), the light emitted by the one or more green quantum dots (18), and the light emitted by the one or more red quantum dots (20).

14. The method (300) of any of claims 10 to 13, wherein the one or more red quantum dots (20) are configured to emit light having a peak emission between 620nm and 635nm

15. The method (300) of any of claims 10 to 14, wherein the one or more red quantum dots (20) do not emit light having a wavelength greater than 640nm.

## Patentansprüche

1. Anzeige (10), die umfasst:
eine blaue Leuchtdiode (*light emitting diode* - LED) (14); und
eine transparente Hülle (16), die über der blauen LED (14) angeordnet ist, wobei die transparente Hülle (16) mehrere rote Quantenpunkte (20) umfasst, die konfiguriert sind, um Licht von der blauen LED (14) zu absorbieren und Licht in einem roten Spektralbereich zu emittieren;
wobei die blaue LED (14) konfiguriert ist, um Licht zu emittieren, das eine maximale Emission zwischen 450 nm und 460 nm aufweist; und
wobei die transparente Hülle (16) konfiguriert ist, um Licht zu übertragen, das von der blauen LED (14) emittiert wird.

2. Anzeige (10) nach Anspruch 1, wobei die transparente Hülle (16) mehrere grüne Quantenpunkte (18) umfasst, die konfiguriert sind, um Licht von der blauen LED (14) zu absorbieren und Licht in einem grünen Spektralbereich zu emittieren.

3. Anzeige (10) nach Anspruch 1 oder 2, wobei die mehreren roten Quantenpunkte (20) konfiguriert sind, um Licht zu emittieren, das eine maximale Emission bei höchstens 635 nm aufweist.

4. Anzeige (10) nach einem der vorhergehenden Ansprüche, wobei die mehreren roten Quantenpunkte (20) konfiguriert sind, um Licht zu emittieren, das eine maximale Emission zwischen 620 nm und 635 nm aufweist.

5. Anzeige (10) nach einem der vorhergehenden Ansprüche, wobei die roten Quantenpunkte (20) kein Licht emittieren, das eine Wellenlänge von über 640 nm aufweist.

6. Anzeige (10) nach einem der vorhergehenden Ansprüche, wobei die blaue LED (14) mit einer Grundplatte (12) gekoppelt ist.

7. Anzeige (10) nach Anspruch 6, die eine Flüssigkristallanzeige (*liquid crystal display-*LCD) (24) umfasst, die gegenüber der Grundplatte (12) angeordnet ist.

8. Anzeige (10) nach Anspruch 7, die einen lichtstreuenden Körper (22) umfasst, der zwischen der transparenten Hülle (16) und der LCD (24) angeordnet ist.

9. Anzeige (10) nach einem der vorhergehenden Ansprüche, wobei die transparente Hülle (16) aus Glas besteht.

10. Verfahren (300) zum Betreiben einer Anzeige (10), das umfasst:
Emittieren (302) von Licht in einem blauen Spektralbereich über eine oder mehrere blaue LEDs (14);
Absorbieren (306) des Lichts, das durch die eine oder die mehreren blauen LEDs (14) emittiert wird, über einen oder mehrere rote Quantenpunkte (20), die auf einer oder mehreren Hüllen (16) angeordnet sind, die über der einen oder den mehreren blauen LEDs (14) angeordnet sind, und Emittieren (306) von Licht in einem roten Spektralbereich; und
Übertragen (310), über die eine oder die mehreren Hüllen (16), von Licht in dem blauen Spektralbereich, das durch die eine oder die mehreren blauen LEDs (14) emittiert wird;
wobei das Licht in einem blauen Spektralbereich eine maximale Emission zwischen 450 nm und 460 nm aufweist.

11. Verfahren (300) nach Anspruch 10, wobei der eine oder die mehreren roten Quantenpunkte (20) konfiguriert sind, um Licht zu emittieren, das eine maximale Emission bei höchstens 635 nm aufweist.

12. Verfahren (300) nach Anspruch 10, das ein Absorbieren (304) des Lichts, das durch die eine oder die mehreren blauen LEDs (14) emittiert wird, über einen oder mehrere grüne Quantenpunkte (18), die auf der einen oder den mehreren Hüllen (16) angeordnet sind, die über der einen oder den mehreren blauen LEDs (14) angeordnet sind, und das Emittieren (304) von Licht in einem grünen Spektralbereich umfasst.

13. Verfahren (300) nach Anspruch 12, das ein Zerstreuen (308), über einen lichtstreuenden Körper (22), des Lichts, das durch die eine oder die mehreren Hüllen (16) übertragen wird, des Lichts, das durch den einen oder die mehreren grünen Quantenpunkte (18) emittiert wird, und des Lichts, das durch die einen oder die mehreren roten Quantenpunkte (20) emittiert wird, umfasst.

14. Verfahren (300) nach einem der Ansprüche 10 bis 13, wobei der eine oder die mehreren roten Quantenpunkte (20) konfiguriert sind, um Licht zu emittieren, das eine maximale Emission zwischen 620 nm und 635 nm aufweist.

15. Verfahren (300) nach einem der Ansprüche 10 bis 14, wobei der eine oder die mehreren roten Quantenpunkte (20) kein Licht emittieren, das eine Wellenlänge von über 640 nm aufweist.

## Revendications

1. Affichage (10), comprenant :
une diode électroluminescente bleue (DEL) (14) ; et
un capot transparent (16) disposé sur la DEL bleue (14), le capot transparent (16) comprenant une pluralité de points quantiques rouges (20) configurés pour absorber de la lumière de la DEL bleue (14) et émettre de la lumière dans une région spectrale rouge ;
dans lequel la DEL bleue (14) est configurée pour émettre de la lumière ayant une émission de crête entre 450 nm et 460 nm ; et
dans lequel le capot transparent (16) est conçu pour transmettre de la lumière émise de la DEL bleue (14).

2. Affichage (10) selon la revendication 1, dans lequel le capot transparent (16) comprend une pluralité de points quantiques verts (18) configurés pour absorber de la lumière de la DEL bleue (14) et émettre de la lumière dans une région spectrale verte.

3. Affichage (10) selon l'une des revendications 1 ou 2, dans lequel la pluralité de points quantiques rouges (20) sont configurés pour émettre de la lumière ayant une émission de crête à 635 nm ou moins.

4. Affichage (10) selon l'une quelconque des revendications précédentes, dans lequel la pluralité de points quantiques rouges (20) sont configurés pour émettre de la lumière ayant une émission de crête entre 620 nm et 635 nm.

5. Affichage (10) selon l'une quelconque des revendications précédentes, dans lequel les points quantiques rouges (20) n'émettent pas de lumière ayant une longueur d'onde supérieure à 640 nm.

6. Affichage (10) selon l'une quelconque des revendications précédentes, dans lequel la DEL bleue (14) est couplée à une plaque de base (12).

7. Affichage (10) selon la revendication 6, comprenant un affichage à cristaux liquides (LCD) (24) disposé en face de la plaque de base (12).

8. Affichage (10) selon la revendication 7, comprenant un diffuseur (22) disposé entre le capot transparent (16) et l'écran LCD (24).

9. Affichage (10) selon l'une quelconque des revendications précédentes, dans lequel le capot transparent (16) est en verre.

10. Procédé (300) de fonctionnement d'un affichage (10), comprenant :
l'émission (302) de lumière dans une région spectrale bleue par l'intermédiaire d'une ou plusieurs DEL bleues (14) ;
l'absorption (306) de la lumière émise par la ou les DEL bleues (14), par l'intermédiaire d'un ou plusieurs points quantiques rouges (20) disposés sur un ou plusieurs capots (16) disposés sur la ou les DEL bleues (14), et l'émission (306) de lumière dans une région spectrale rouge ; et
la transmission (310), par l'intermédiaire du ou des capots (16), de lumière dans la région spectrale bleue émise par la ou les DEL bleues (14) ;
dans lequel la lumière dans une région spectrale bleue a une émission de crête entre 450 nm et 460 nm.

11. Procédé (300) selon la revendication 10, dans lequel le ou les points quantiques rouges (20) sont configurés pour émettre de la lumière ayant une émission de crête à 635 nm ou moins.

12. Procédé (300) selon la revendication 10, comprenant l'absorption (304) de la lumière émise par la ou les DEL bleues (14), par l'intermédiaire d'un ou plusieurs points quantiques verts (18) disposés sur le ou les capots (16) disposés sur la ou les DEL bleues (14) et émettant (304) de la lumière dans une région spectrale verte.

13. Procédé (300) selon la revendication 12, comprenant la diffusion (308), par l'intermédiaire d'un diffuseur (22), de la lumière transmise par le ou les capots (16), la lumière émise par le ou les points quantiques verts (18), et la lumière émise par le ou les points quantiques rouges (20).

14. Procédé (300) selon l'une quelconque des revendications 10 à 13, dans lequel le ou les points quantiques rouges (20) sont configurés pour émettre de la lumière ayant une émission de crête entre 620 nm et 635 nm.

15. Procédé (300) selon l'une quelconque des revendications 10 à 14, dans lequel le ou les points quantiques rouges (20) n'émettent pas de lumière ayant une longueur d'onde supérieure à 640 nm.
